(19) Europäisches Patentamt / European Patent Office / Office européen des brevets

(11) **EP 2 098 997 A1**

(12) **EUROPEAN PATENT APPLICATION**
published in accordance with Art. 153(4) EPC

(43) Date of publication:
**09.09.2009 Bulletin 2009/37**

(51) Int Cl.:
**G06T 15/70** (2006.01)    **G06T 17/40** (2006.01)
**A63F 13/00** (2006.01)

(21) Application number: **07832491.0**

(22) Date of filing: **26.11.2007**

(86) International application number:
**PCT/JP2007/072766**

(87) International publication number:
**WO 2008/081661 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 JP 2006355720**

(71) Applicant: **Konami Digital Entertainment Co., Ltd. Tokyo 107-8324 (JP)**

(72) Inventor: **ISHIDA, Zenta Tokyo 107-8324 (JP)**

(74) Representative: **Winter, Brandl, Fürniss, Hübner Röss, Kaiser, Polte Partnerschaft Patent- und Rechtsanwaltskanzlei Alois-Steinecker-Strasse 22 85354 Freising (DE)**

(54) **IMAGE PROCESSOR, CONTROL METHOD OF IMAGE PROCESSOR AND INFORMATION RECORDING MEDIUM**

(57)    Provided is an image processor which makes it easier for a person other than a programmer, for example, a designer of a shape and the like of a collided object, to participate in behavior control performed on a mobile object in the case where the mobile object collides against the collided object. A behavior control information storage unit (60a) stores acceleration vector information in association with each of a plurality of behavior control-purpose objects. The behavior control-purpose objects are located in a space on a back surface side of a surface, against which the mobile object collides, of the collided object. The acceleration vector information is information for identifying an acceleration vector of the mobile object resulting from a force applied to the mobile object by the collided object. A ball object behavior control unit (64a) controls behavior of the mobile object based on the acceleration vector information associated with the behavior control-purpose object judged by a judgment unit (62) to be contacted by the mobile object.

**FIG.5**

60 : GAME DATA STORAGE UNIT

64 : OBJECT BEHAVIOR CONTROL UNIT

EP 2 098 997 A1

**Description**

TECHNICAL FIELD

The present invention relates to an image processor, a control method for an image processor, and an information recording medium.

BACKGROUND ART

In three-dimensional image processing, a state of a virtual three-dimensional space where an object is placed is viewed from a given viewpoint is displayed. In the field of such three-dimensional image processing, there exists, for example, technology disclosed in Patent Document 1 as technology for suitably expressing a state in which a mobile object collides against a collided object that is deformed by the mobile object colliding against it.
Patent Document 1: JP 3768971 B

DISCLOSURE OF THE INVENTION

Problem to be Solved by the Invention

Up to now, behavior control performed on a mobile object when the mobile object collides against a collided object is realized solely on a program side. Accordingly, it is difficult for a person other than a programmer, for example, a designer of a shape and the like of the collided object, to participate in the behavior control performed on the mobile object when the mobile object collides against the collided object.
The present invention has been made in view of the above-mentioned problem, and therefore an object thereof is to provide an image processor, a control method for an image processor, and an information recording medium, which make it easy for a person other than the programmer, for example, the designer of the shape and the like of the collided object, to participate in the behavior control performed on the mobile object when the mobile object collides against the collided object.

Means for Solving the Problem

In order to solve the above-mentioned problem, an image processor according to the present invention, which locates a mobile object, and a collided object that is deformed in the case where the mobile object collides against it, in a virtual three-dimensional space and displays an image showing a state in which the mobile object collides against the collided object, includes: acceleration vector information storage means for storing acceleration vector information for identifying an acceleration vector of the mobile object resulting from a force applied to the mobile object by the collided object, in association with each of a plurality of behavior control-purpose objects that are located in a space on a back surface side of a surface, against which the mobile object collides, of the collided object; judgment means for judging whether or not the mobile object contacts at least one of the plurality of behavior control-purpose objects; and mobile object behavior control means for controlling, if it is judged that the mobile object contacts at least one of the plurality of behavior control-purpose objects, behavior of the mobile object based on the acceleration vector identified by the acceleration vector information associated with the at least one of the behavior control-purpose objects.
Further, according to the present invention, a control method for an image processor which locates a mobile object and a collided object that is deformed in the case where the mobile object collides against it in a virtual three-dimensional space and displays an image showing a state in which the mobile object collides against the collided object, including: a step of reading storage contents of acceleration vector information storage means for storing acceleration vector information for identifying an acceleration vector of the mobile object resulting from a force applied to the mobile object by the collided object, in association with each of a plurality of behavior control-purpose objects that are located in a space on a back surface side of a surface, against which the mobile object collides, of the collided object; a judgment step of judging whether or not the mobile object contacts at least one of the plurality of behavior control-purpose objects; and a mobile object behavior control step of controlling, if it is judged that the mobile object contacts at least one of the plurality of behavior control-purpose objects, behavior of the mobile object based on the acceleration vector identified by the acceleration vector information associated with the at least one of the behavior control-purpose objects.
A program according to the present invention causes a computer such as a home-use game machine, a portable game machine, a business-use game machine, a portable phone, a personal digital assistant (PDA), and a personal computer to function as an image processor which locates a mobile object, and a collided object that is deformed in the case where the mobile object collides against it, in a virtual three-dimensional space and displays an image showing a state in which the mobile object collides against the collided object. The program according to the present invention further causes the computer to function as: acceleration vector information storage means for storing acceleration vector information for identifying an acceleration vector of the mobile object resulting from a force applied to the mobile object by the collided obj ect, in association with each of a plurality of behavior control-purpose objects that are located in a space on a back surface side of a surface, against which the mobile object collides, of the collided object; judgment means for judging whether or not the mobile object contacts at least one of the plurality of behavior control-purpose objects; and mobile object behavior control means for controlling, if it is judged that the mobile object contacts at least one of the plurality of behavior control-purpose objects, behavior of the mobile object based on the acceleration vector identified by the acceleration vector information associated with the at least one of the behavior control-purpose objects.

Further, an information recording medium according to the present invention is a computer-readable information recording medium recorded with the above-mentioned program. Further, a program delivery device according to the present invention is a program delivery device including an information recording medium recorded with the above-mentioned program, for reading the above-mentioned program from the information recording medium and delivering the program. Further, a program delivery method according to the present invention is a program delivery method of reading the above-mentioned program from an information recording medium recorded with the above-mentioned program and delivering the program.

The present invention relates to the image processor which locates the mobile object, and the collided object that is deformed in the case where the mobile object collides against it, in the virtual three-dimensional space and displays the image showing the state in which the mobile object collides against the collided object. In the present invention, the acceleration vector information is stored in association with each of the plurality of behavior control-purpose objects that are located in the space on the back surface side of the surface, against which the mobile object collides, of the collided object. The acceleration vector information is information for identifying the acceleration vector of the mobile object resulting from the force applied to the mobile object by the collided object. Here, the acceleration vector information may be information indicating the acceleration vector per se, or may be information based on which the acceleration vector is calculated. Further, in the present invention, it is judged whether or not the mobile object contacts at least one of the plurality of behavior control-purpose objects. Then, if it is judged that the mobile object contacts at least one of the plurality of behavior control-purpose objects, the behavior of the mobile object is controlled based on the acceleration vector identified by the acceleration vector information associated with the at least one of the behavior control-purpose objects. According to the present invention, for example, it becomes possible for the designer of the shape and the like of the collided object to set the behavior control-purpose object and the acceleration vector information associated with the behavior control-purpose object in accordance with the shape and the like of the collided object, and to create those data and shape data and the like of the collided object as data on the collided object. As a result, for example, the designer of the shape and the like of the collided object can easily participate in the behavior control performed on the mobile object in the case where the mobile object collides against the collided object.

According to one aspect of the present invention, an image processor may further include bounce control information storage means for storing, in association with each of the plurality of behavior control-purpose objects, bounce control information that indicates whether or not the mobile object is bounced by the behavior control-purpose object. Further, the mobile object behavior control means may include means for controlling, if the bounce control information associated with the behavior control-purpose object judged to contact the mobile object indicates that the mobile object is bounced by the behavior control-purpose object, the behavior of the mobile object assuming that the mobile object is bounced at a given bounce coefficient by the behavior control-purpose object.

According to another aspect of the present invention, the judgment means may include reference position setting means for setting a reference position by executing a predetermined computation based on a current position of the mobile object, and may judge whether or not the mobile object contacts the plurality of behavior control-purpose objects by judging whether or not a straight line from the reference position set by the reference position setting means to the current position of the mobile object intersects the plurality of behavior control-purpose objects.

BRIEF DESCRIPTION OF THE DRAWINGS

FIG. 1 is a diagram illustrating a hardware configuration of a game machine according to an embodiment of the present invention.
FIG. 2 is a diagram illustrating an example of a virtual three-dimensional space.
FIG. 3 is a perspective view illustrating an example of a goal object.
FIG. 4 is a diagram illustrating a part of a goal net.
FIG. 5 is a functional block diagram of the game machine according to the embodiment.
FIG. 6 is a perspective view illustrating an example of a behavior control-purpose object.
FIG. 7 is a diagram illustrating a layout example of behavior control-purpose objects.

FIG. 8 is a diagram illustrating a layout example of the behavior control-purpose objects.

FIG. 9 is a diagram illustrating an example of a behavior control table.

FIG. 10 is a flowchart illustrating processing executed by the game machine.

FIG. 11 is a flowchart illustrating processing executed by the game machine.

FIG. 12 is a diagram for describing setting of a reference point.

FIG. 13 is a diagram for describing the setting of the reference point.

FIG. 14 is a diagram for describing the setting of the reference point.

FIG. 15 is a diagram for describing contact judgment between a ball object and the behavior control-purpose object.

FIG. 16 is a diagram for describing deformation control performed on the goal net.

FIG. 17 is a diagram for describing the deformation control performed on the goal net.

FIG. 18 is a diagram illustrating a layout example of the behavior control-purpose objects.

FIG. 19 is a diagram illustrating a layout example of the behavior control-purpose objects.

FIG. 20 is a diagram for describing the setting of the reference point.

FIG. 21 is a diagram for describing: the setting of the reference point; and the contact judgment between the ball object and the behavior control-purpose object.

FIG. 22 is a diagram illustrating an overall configuration of a program delivery system according to another embodiment of the present invention.

BEST MODE FOR CARRYING OUT THE INVENTION

Hereinafter, an example of an embodiment of the present invention is described in detail based on the drawings. Here, description is given of an example case where the present invention is applied to a game machine constituting an aspect of an image processor. Note that the present invention can also be applied to an image processor other than the game machine.

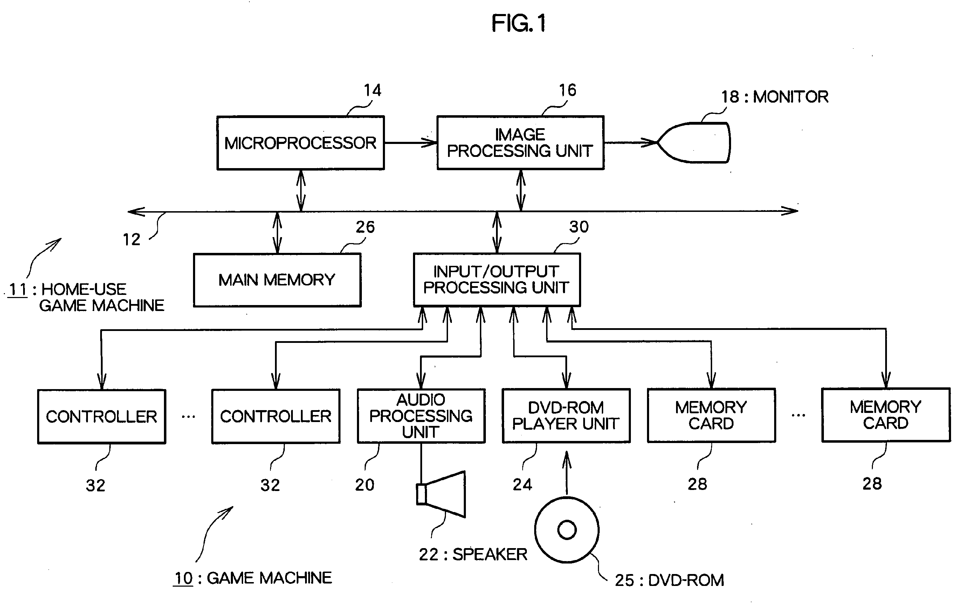

FIG. 1 is a diagram illustrating a configuration of a game machine according to the embodiment of the present invention. A game machine 10 illustrated in FIG. 1 includes a home-use game machine 11 as a main component. A DVD-ROM 25 and a memory card 28, which serve as information storage media, are inserted into the home-use game machine 11. Further, a monitor 18 and a speaker 22 are connected to the home-use game machine 11. For example, a home-use TV set is used for the monitor 18, and a built-in speaker thereof is used for the speaker 22.

The home-use game machine 11 is a well-known computer game system including a bus 12, a microprocessor 14, an image processing unit 16, an audio processing unit 20, a DVD-ROM player unit 24, a main memory 26, an input/output processing unit 30, and a controller 32. The configurational components other than the controller 32 are accommodated in an enclosure.

The bus 12 is for exchanging addresses and data among the units of the home-use game machine 11. The microprocessor 14, the image processing unit 16, the main memory 26, the input/output processing unit 30 are connected via the bus 12 so as to communicate data with one another.

The microprocessor 14 controls the individual units of the home-use game machine 11 in accordance with an operating system stored in a ROM (not shown), a game program, or game data read from the DVD-ROM 25 or the memory card 28. The main memory 26 includes, for example, a RAM, and the game program or game data read from the DVD-ROM 25 or the memory card 28 are written to the main memory 26, if necessary. The main memory 26 is also used as a working memory of the microprocessor 14.

The image processing unit 16 includes a VRAM. The image processing unit 16 receives image data sent from the microprocessor 14 to render a game screen in the VRAM, and converts a content thereof into predetermined video signals to output the video signals to the monitor 18 at predetermined timings.

The input/output processing unit 30 is an interface for allowing the microprocessor 14 to access the audio processing unit 20, the DVD-ROM player unit 24, the memory card 28, and the controller 32. The audio processing unit 20, the DVD-ROM player unit 24, the memory card 28, and the controller 32 are connected to the controller interface 30.

The audio processing unit 20, which includes a sound buffer, reproduces various categories of sound data such as game music, game sound effects, and messages that are read from the DVD-ROM 25 and stored in the sound buffer, and outputs the sound data from the speaker 22.

The DVD-ROM player unit 24 reads the game program or game data recorded on the DVD-ROM 25 in accordance with an instruction given from the microprocessor 14. In this case, the DVD-ROM 25 is employed for supplying the game program or game data to the home-use game machine 11, but any other information storage media such as a CD-ROM or a ROM card may also be used. Further, the game program or game data may also be supplied to the home-use game machine 11 from a remote location via a communication network such as the Internet.

The memory card 28 includes a nonvolatile memory (for example, EEPROM). The home-use game machine 11 is provided with a plurality of memory card slots for allowing insertion of the memory card 28 thereinto. The memory card 28 is used for storing various kinds of game data such as saved data.

The controller 32 is general-purpose operation input means for allowing a player to input various kinds of game operations. The input/output processing unit 30 scans a state of each unit of the controller 32 every predetermined cycle (for example, every $1/60^{th}$ of a second), and transfers an operation signal indicating its scanning results to the microprocessor 14 via the bus 12. The microprocessor 14 judges the game operation to be performed by the player based on the operation signal. The home-use game machine 11 is configured so that a plurality of controllers 32 can be connected to the home-use game machine 11.

On the game machine 10 having the above-mentioned configuration, a soccer game is realized by executing a program that is read from the DVD-ROM 25.

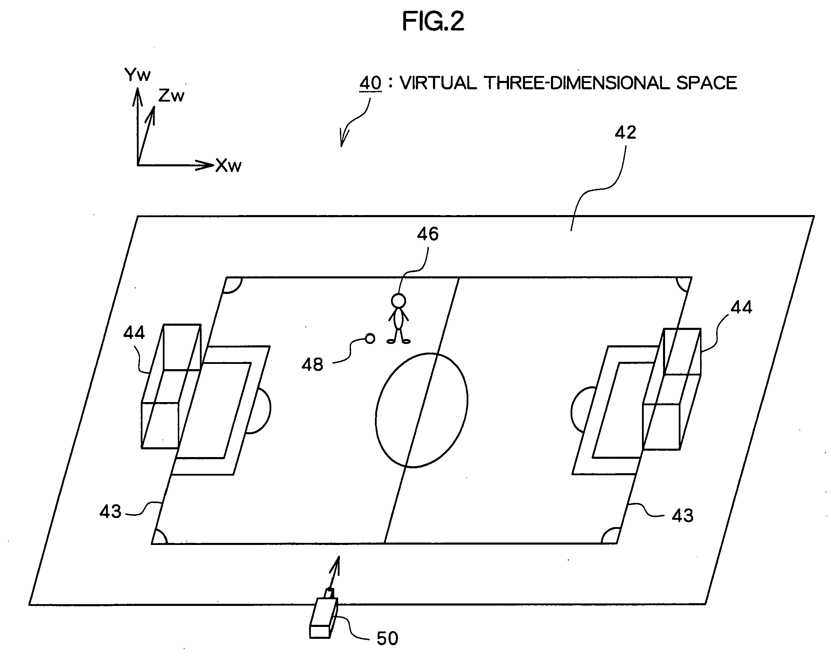

In order to realize the above-mentioned soccer game, a virtual three-dimensional space is built in the main memory 26. FIG. 2 illustrates an example of the virtual three-dimensional space. As illustrated in FIG. 2, a field object 42 representing a soccer field and goal objects 44 each representing a goal are located in a virtual three-dimensional space 40, which forms a soccer match venue. For example, goal lines 43 and the like are drawn on the field object 52. Further, a player object 46 representing a soccer player and a ball object 48 (mobile object) representing a soccer ball are located on the field object 42. Although omitted from FIG. 2, twenty-two player objects 46 are located on the field object 42.

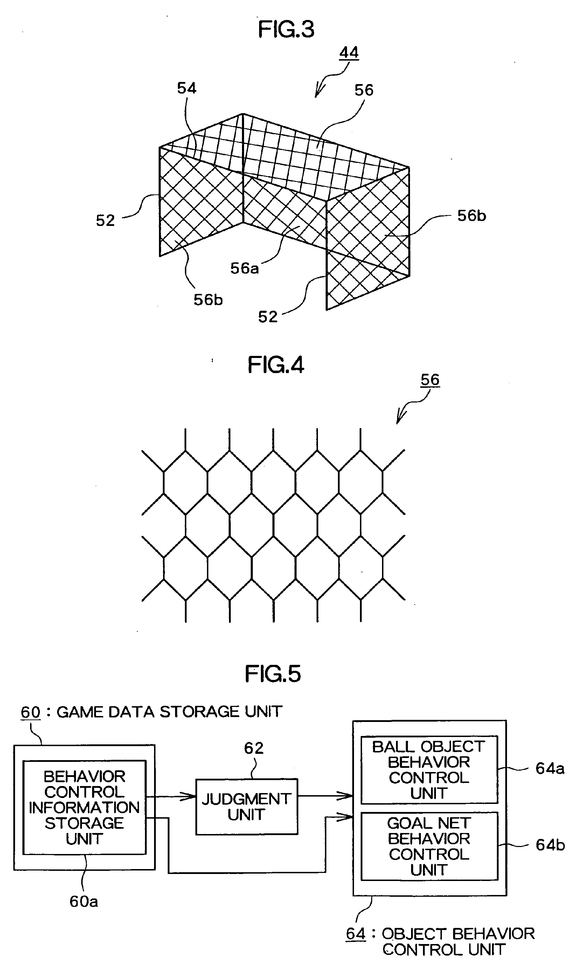

FIG. 3 is a perspective view illustrating an example of the goal object 44. As illustrated in FIG. 3, the goal object 44 includes: a frame body that includes two goal posts 52 and a crossbar 54; and a goal net 56 (collided object) stretched over the frame body. The goal net 56 is fixed to, for example, the goal posts 52, the crossbar 54, and a ground (field object 42) in the back of the goal object 44 with a certain amount of slack. FIG. 4 is a diagram illustrating a part of the goal net 56. A mesh structure of the goal net 56 is not drawn in detail in FIG. 3, but as illustrated in FIG. 4, the goal net 56 has a hexagonal mesh structure. Note that each vertex of a cell of the hexagonal mesh structure is referred to as "node" in the following description.

In addition, a virtual camera 50 (viewpoint and viewing direction) is set in the virtual three-dimensional space 40. The virtual camera 50 moves, for example, according to the movement of the ball object 48. A game screen showing a state of the virtual three-dimensional space 40 viewed from the virtual camera 50 is displayed on the monitor 18.

Hereinafter, description is given of technology for expressing behaviors of the ball object 48 and the goal net 56 in a case where the ball object 48 collides against the goal net 56. That is, the description is given of technology for expressing a state in which the movement of the ball object 48 is damped by the goal net 56 and a state in which the goal net 56 is swung due to collision of the ball object 48 in the case where the ball object 48 collides against the goal net 56.

First, description is given of functions implemented by the game machine 10. FIG. 5 is a functional block diagram mainly illustrating functions related to the present invention among the functions implemented by the game machine 10. As illustrated in FIG. 5, the game machine 10 functionally includes a game data storage unit 60, a judgment unit 62, and an object behavior control unit 64. Those functions are implemented by the game machine 10 (microprocessor 14) executing a program read from the DVD-ROM 25.

The game data storage unit 60 is implemented mainly by the DVD-ROM 25 and the main memory 26. The game data storage unit 60 stores various kinds of data for implementing the above-mentioned soccer game. The game data storage unit 60 stores information that indicates a basic shape of each object located in the virtual three-dimensional space 40. In addition, the game data storage unit 60 stores information that indicates a current state of each object located in the virtual three-dimensional space 40. For example, the game data storage unit 60 stores information that indicates a position, a posture, and a shape of a static object such as the goal object 44 or a behavior control-purpose object described later. Further, for example, the game data storage unit 60 stores information that indicates a position, a posture, and a moving speed vector (moving direction and speed) of a dynamic obj ect such as each player object 46 or the ball object 48. Further, the game data storage unit 60 stores information that indicates a position (viewpoint position) and a posture (viewing direction) of the virtual camera 50.

The game data storage unit 60 includes the behavior control information storage unit 60a (acceleration vector information storage means and bounce control information storage means). The behavior control information storage unit 60a stores the behavior control information. The behavior control information is information based on which the behaviors of the ball object 48 and the goal net 56 are controlled in the case where the ball object 48 collides against the goal net 56.

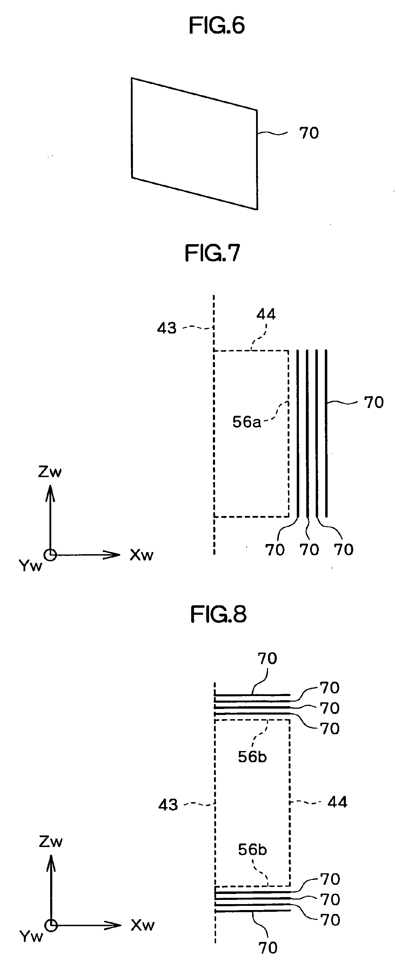

In the game machine 10, a plurality of behavior control-purpose objects are located in the virtual three-dimensional space 40 in order to control the behaviors of the ball object 48 and the goal net 56 in the case where the ball object 48 collides against the goal net 56. FIG. 6 is a perspective view illustrating an example of the behavior control-purpose object. As illustrated in FIG. 6, a behavior control-purpose object 70 is a plate-like rectangular object. The behavior control-purpose object 70 is an invisible (transparent) object, and is not displayed on the game screen. Further, the behavior control-purpose object 70 has a front and a back thereof distinguished from one another. FIGS. 7 and 8 each illustrate a layout example of the behavior control-purpose objects 70. Note that FIGS. 7 and 8 use the dotted lines to indicate the goal object 44 and the goal line 43 in order to make it easy to grasp a layout state of the behavior control-purpose objects 70.

FIG. 7 illustrates an example of the behavior control-purpose objects 70 that are located in order to control the behaviors of the ball object 48 and the goal net 56 in a case where the ball object 48 enters an inside of the goal object 44 and collides against an inner surface side of a front surface 56a of the goal net 56. The behavior control-purpose objects 70 illustrated in FIG. 7 are located in a space on an outer surface side of the front surface 56a of the goal net 56. The plurality of behavior control-purpose objects 70 illustrated in FIG. 7 are arranged at given intervals so as to gradually move away from the goal net 56. The behavior control-purpose objects 70 illustrated in FIG. 7 are located substantially parallel to the front surface 56a of the goal net 56. The behavior control-purpose objects 70 illustrated in FIG. 7 are located so that their front sides are directed toward the front surface 56a of the goal net 56. The behavior control-purpose objects 70 illustrated in FIG. 7 are each set to have the same area as an area of the front surface 56a of the goal net 56 or to be wider than the area of the front surface 56a of the goal net 56.

FIG. 8 illustrates an example of the behavior control-purpose objects 70 that are located in order to control the behaviors of the ball object 48 and the goal net 56 in the case where the ball object 48 enters the inside of the goal object 44 and collides against the inner surface side of a side surface 56b of the goal net 56. The behavior control-purpose objects 70 illustrated in FIG. 8 are located in a space on an outer surface side of the side surface 56b of the goal net 56. The plurality of behavior control-purpose objects 70 illustrated in FIG. 8 are also arranged at given intervals so as to gradually move away from the goal net 56. The behavior control-purpose objects 70 illustrated in FIG. 8 are located substantially parallel to the side surface 56b of the goal net 56. The behavior control-purpose objects 70 illustrated in FIG. 8 are located so that their front sides are directed toward the side surface 56b of the goal net 56. The behavior control-purpose objects 70 illustrated in FIG. 8 are each set to have the same area as an area of the side surface 56b of the goal net 56 or to be wider than the area of the side surface 56b of the goal net 56.

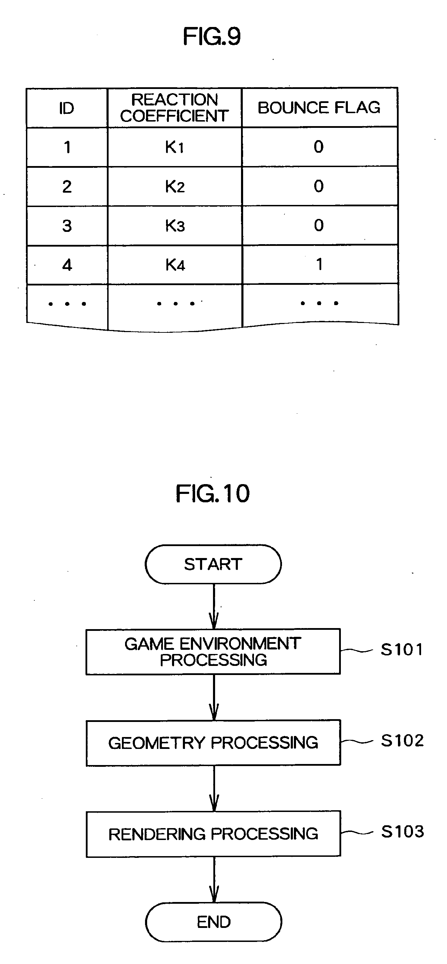

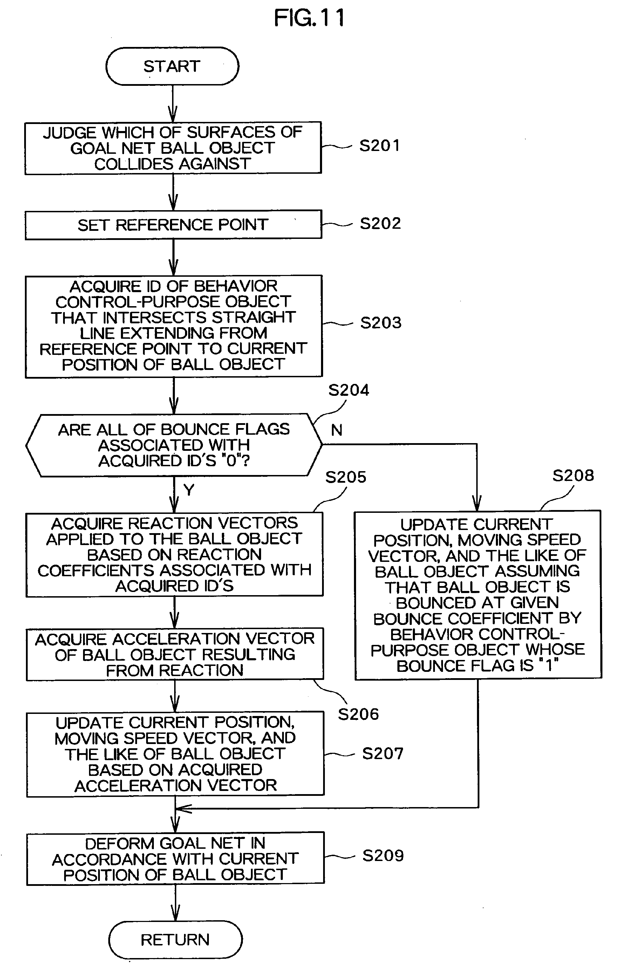

The behavior control information storage unit 60a stores the behavior control information in association with each of the behavior control-purpose objects 70. FIG. 9 illustrates an example of a behavior control table stored in the behavior control information storage unit 60a. As illustrated in FIG. 9, the behavior control table includes an "ID" field, a "reaction coefficient" field, and a "bounce flag" field. An ID (identification information) for uniquely identifying the behavior control-purpose object 70 is stored in the "ID" field. Note that herein, the behavior control-purpose objects 70 illustrated in FIG. 7 are assigned the IDs "1", "2", "3", and "4" in ascending order of distance from the goal net 56. A reaction coefficient (acceleration vector information) is stored in the "reaction coefficient" field. The reaction coefficient represents numerical value information that indicates a strength of a force (reaction) applied to the ball object 48, that has collided against the goal net 56, by the goal net 56. As described later, an acceleration vector of the ball object 48 resulting from the force applied to the ball object 48 by the goal net 56 is identified based on the reaction coefficient (see Steps S205 and S206 of FIG. 11). A bounce flag (bounce control information) is stored in the "bounce flag" field. The bounce flag represents information that indicates whether or not to set the ball object 48 to be bounced by the behavior control-purpose object 70 if the ball object 48 contacts the behavior control-purpose object 70. If the ball object 48 is set to be bounced by the behavior control-purpose object 70, the "bounce flag" field is set to have a value of "1". Meanwhile, if the ball object 48 is not set to be bounced by the behavior control-purpose object 70, the "bounce flag" field is set to have a value of "0". In this embodiment, in each of FIGS. 7 and 8, the value of the "bounce flag" field, which corresponds to one of the behavior control-purpose objects 70 that exists at the most distant position from the front surface 56a or the side surface 56b of the goal net 56, is set to "1", while the value of the "bounce flag" field corresponding to the other behavior control-purpose objects 70 is set to "0".

The judgment unit 62 is implemented mainly by the microprocessor 14. The judgment unit 62 judges whether or not the ball object 48 has contacted the behavior control-purpose object 70. Details thereof are described later (see Steps S202 and S203 of FIG. 11).

The object behavior control unit 64 is implemented mainly by the microprocessor 14. The object behavior control unit 64 controls the behavior of each object located in the virtual three-dimensional space 40. That is, the object behavior control unit 64 controls the position, the posture, the shape, and the like of each object located in the virtual three-dimensional space 40. The object behavior control unit 64 includes a ball object behavior control unit 64a and a goal net behavior control unit 64b.

The ball object behavior control unit 64a controls the behavior of the ball object 48 in the case where the ball object 48 collides against the goal net 56. If it is judged that the ball object 48 has contacted a behavior control-purpose object 70, the ball object behavior control unit 64a executes behavior control on the ball object 48 based on the behavior control information associated with that behavior control-purpose object 70. Details thereof are described later (see Steps S203 to S208 of FIG. 11).

The goal net behavior control unit 64b executes behavior control (deformation control) on the goal net 56 in the case where the ball object 48 collides against the goal net 56. The goal net behavior control unit 64b executes the behavior control on the goal net 56 based on the position of the ball object 48 controlled by the ball object behavior control unit 64a. Details thereof are described later (see Step S209 of FIG. 11).

Next, description is made of processing executed by the game machine 10. FIG. 10 is a flowchart illustrating processing executed by the game machine 10 every predetermined time (for example, 1/60th of a second).

As illustrated in FIG. 10, the game machine 10 first executes game environment processing (S101). In the game environment processing, the state (a position, a posture, a moving direction vector, and a shape) of each object located in the virtual three-dimensional space 40 is computed. Then, the information indicating the state of each object stored in the game data storage unit 60 is updated based on a computation result thereof. Further in the game environment processing, the position, an orientation, angle of view of the virtual camera 50 is decided, and a field-of-view range is calculated. An object that does not exist within the field-of-view range is not subjected to the subsequent processing.

After that, the game machine 10 executes geometry processing (S102). In the geometry processing, a coordinate transformation is performed from a world coordinate system to a viewpoint coordinate system. Herein, the world coordinate system represents a coordinate system constituted of an Xw-axis, a Yw-axis, and a Zw-axis illustrated in FIG. 2. The viewpoint coordinate system represents a coordinate system in which the origin point is set to the position (viewpoint) of the virtual camera 50 with the front surface direction (viewing direction) of the virtual camera 50 set as a Z direction, the horizontal direction thereof set as an X direction, and the vertical direction thereof set as a Y direction. In the geometry processing, clipping processing is also performed.

After that, the game machine 10 executes rendering processing (S103). In the rendering processing, the game screen is drawn in the VRAM based on coordinates, color information, and an alpha value of each vertex of each object within the field-of-view range, a texture image mapped on a surface of each object within the field-of-view range, and the like. The game screen drawn in the VRAM is display-output to the monitor 18 at a given timing.

Herein, description is given of processing executed in the case where the ball object 48 collides against the goal net 56. FIG. 11 is a flowchart illustrating the processing executed in the case where the ball object 48 collides against the goal net 56. This processing is executed as a part of the game environment processing (S101 of FIG. 10). A program for executing this processing is read from the DVD-ROM 25, and is executed by the game machine 10 (microprocessor 14) to thereby implement each functional block illustrated in FIG. 5.

As illustrated in FIG. 11, the game machine 10 judges which of the surfaces (front surface 56a and side surface 56b) of the goal net 56 the ball object 48 collides against (S201). Then, the game machine 10 (judgment unit 62; reference position setting means) sets a reference point (S202).

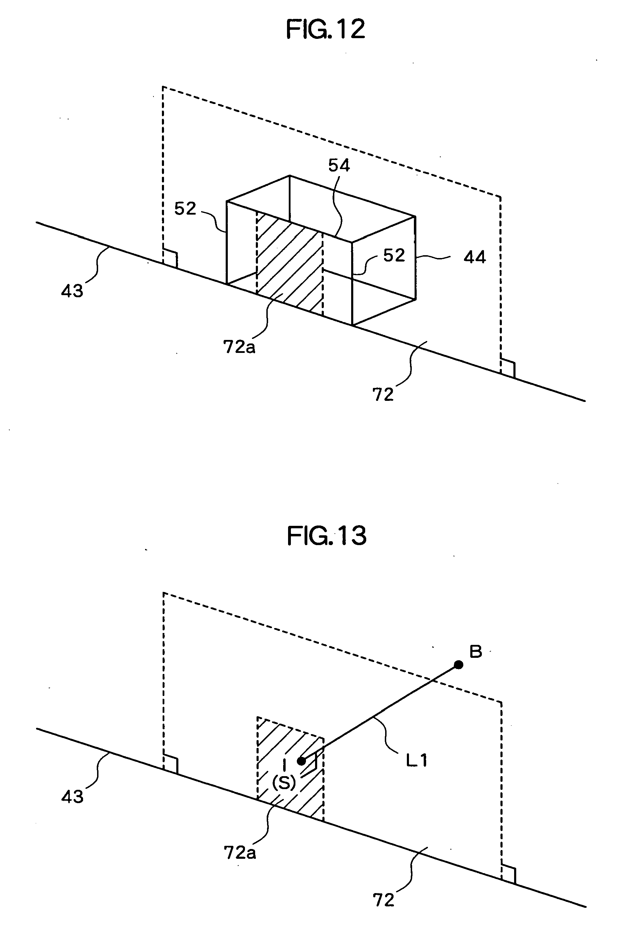

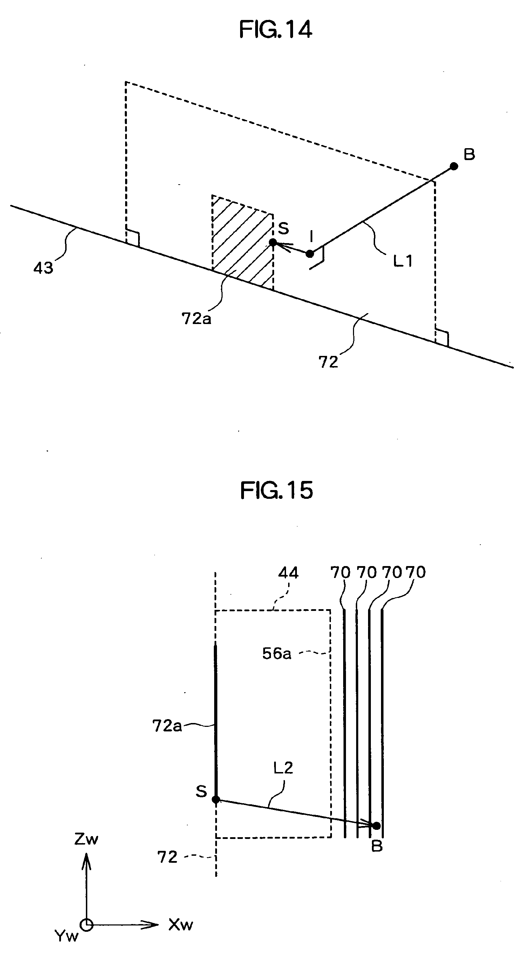

Herein, the setting of a reference point is described by taking an example case where the ball object 48 enters the inside of the goal object 44 and collides against the goal net 56. FIGS. 12 to 14 are diagrams for describing the reference point set in the case where the ball object 48 enters the inside of the goal object 44 and collides against the goal net 56. The game machine 10 first acquires an intersection point I of a perpendicular L1, which extends from a current position B of the ball object 48 toward a reference plane 72, and the reference plane 72. As illustrated in FIG. 12, the reference plane 72 is set on the opposite side to a side on which the behavior control-purpose object 70 exists across the goal net 56. In the example of FIG. 12, a YwZw plane on the goal line 43 is set as the reference plane 72. Then, the game machine 10 judges whether or not the intersection point I is within a reference point setting subject region 72a of the reference plane 72. Herein, the reference point setting subject region 72a is a region in which a reference point can be set. In the example of FIG. 12, a region in the vicinity of the center of a region surrounded by the goal posts 52, the crossbar 54, and the goal line 43 is set as the reference point setting subject region 72a. As illustrated in FIG. 13, if the intersection point I is within the reference point setting subject region 72a, the game machine 10 sets the intersection point I as a reference point S. Meanwhile, as illustrated in FIG. 14, if the intersection point I is not within the reference point setting subject region 72a, the game machine 10 sets a point on the reference point setting subject region 72a, which is closest to the intersection point I, as the reference point S.

After the reference point is set, as illustrated in, for example, FIG. 15, the game machine 10 (judgment unit 62) acquires the ID of the behavior control-purpose object 70 that intersects a straight line L2 extending from the reference point S to the current position B of the ball object 48 (S203). Acquired in the example case of FIG. 15 are the IDs of the behavior control-purpose object 70 that is closest to the front surface 56a of the goal net 56 and the behavior control-purpose objects 70 that are second and third closest to the front surface 56a of the goal net 56. Note that in FIG. 15, the goal object 44 is indicated by the dotted line in order to make it easy to grasp relationships between the reference point S, the current position B of the ball object 48, the straight line L2, and the behavior control-purpose objects 70.

After that, the game machine 10 (ball object behavior control unit 64a) judges whether or not all of the bounce flags associated with the IDs acquired in Step S203 are "0" (S204). If all of the bounce flags associated with the IDs acquired in Step S203 are "0", the game machine 10 (ball object behavior control unit 64a) acquires reaction vectors, each of which represents a reaction applied to the ball object 48 by the goal net 56, based on the reaction coefficients associated with the IDs acquired in Step S203 (S205). The game machine 10 first acquires the reaction vector corresponding to each of the IDs acquired in Step S203. The reaction vector corresponding to each of the IDs is obtained by multiplying a unit-force vector along a normal direction of a front-side surface of the behavior control-purpose object 70 related to the ID by the reality coefficient associated with the ID. Subsequently, the game machine 10 acquires the reaction vector applied to the ball object 48 by synthesizing the reaction vectors corresponding to the respective IDs acquired in Step S203. For example, if the IDs acquired in Step S203 are "1", "2", and "3", a reaction vector "F" applied to the ball object 48 is defined by the following equation (1). Note that in the following equation (1), "$F_1$" represents the

unit-force vector along the normal direction of the front-side surface of the behavior control-purpose object 70 associated with the ID "1". In a similar manner, "$F_2$" and "$F_3$" represent the unit-force vectors along the normal direction of front-side surfaces of the behavior control-purpose objects 70 associated with the IDs "2" and "3", respectively.

[Formula 1]

$$\vec{F} = K_1 \cdot \vec{F_1} + K_2 \cdot \vec{F_2} + K_3 \cdot \vec{F_3} \quad \ldots \quad (1)$$

Subsequently, the game machine 10 (ball object behavior control unit 64a) acquires the acceleration vector of the ball object 48 resulting from the reaction based on the reaction vector acquired in Step S205 (S206). For example, an acceleration vector "a" of the ball object 48 is acquired by the following equation (2). Note that in the following equation (2), "m" represents a mass of the ball object 48. The mass of the ball object 48 is set in advance and stored in the game data storage unit 60.

[Formula 2]

$$\vec{F} = m \cdot \vec{a} \quad \ldots \quad (2)$$

Subsequently, the game machine 10 (ball object behavior control unit 64a) updates the current position, the moving speed vector, and the like of the ball object 48 based on the acceleration vector acquired in Step S206 (S207). For example, the game machine 10 first calculates a new moving speed vector of the ball object 48 by updating the current moving speed vector of the ball object 48 based on the moving speed vector acquired in Step S206. Subsequently, the game machine 10 calculates, as a new current position of the ball object 48, a position obtained by a position from the current position of the ball object 48 along the moving direction, which is indicated by the moving speed vector of the ball object 48 calculated as described above, at the moving speed, which is indicated by the moving speed vector, for a predetermined time (for example, 1/60$^{th}$ of a second).

Meanwhile, if it is judged that any one of the bounce flags associated with the IDs acquired in Step S203 is "1" in Step S204, the game machine 10 (ball object behavior control unit 64a) updates the current position, the moving speed vector, and the like of the ball object 48 assuming that the ball object 48 has been bounced at a given bounce coefficient by the behavior control-purpose object 70 whose bounce flag is "1" (S208). If, for example, the given bounce coefficient is set as "e", the game machine 10 updates a moving speed vector "V" of the ball object 48 as shown in the following equation (3). Note that the bounce coefficient is a numerical value larger than "0" and smaller than "1".

[Formula 3]

$$\vec{V} = -e \cdot \vec{V} \quad \ldots \quad (3)$$

After updating the current position, the moving speed vector, and the like of the ball object 48, the game machine 10 (goal net behavior control unit 64b) deforms the goal net 56 in accordance with the current position (position that has been updated in Steps S207 or S208) of the ball object 48 (S209). Herein, with regard to deformation control (behavior control) performed on the goal net 56, technology disclosed in JP 3768971 B can be used.

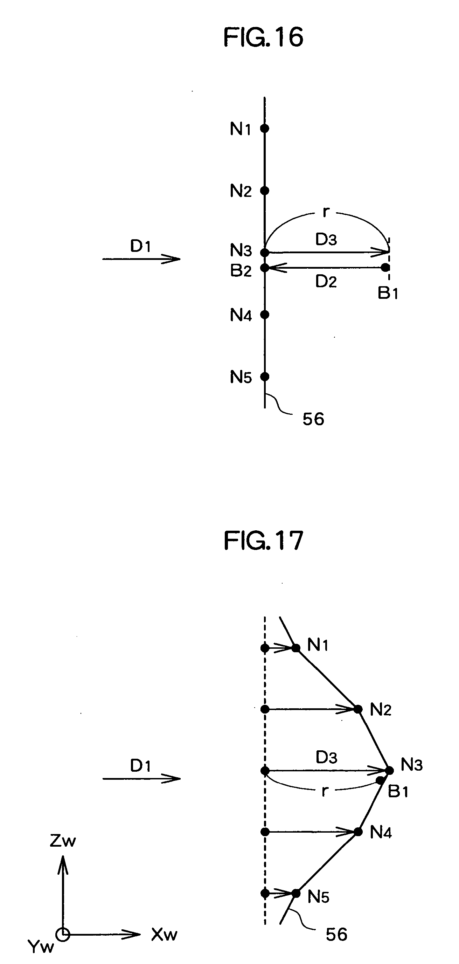

FIGS. 16 and 17 are diagrams for describing the deformation control performed on the goal net 56. Note that FIGS. 16 and 17 show a case where the ball object 48 moves toward a direction D1 illustrated in those figures and collides against the goal net 56. The game machine 10 first judges whether or not the ball object 48 has moved through the goal net 56. If the ball object 48 has not moved through the goal net 56, the deformation of the goal net 56 is not to be performed. If the ball object 48 has moved through the goal net 56, the game machine 10 selects the node that is closest to the ball object 48 from among the nodes ($N_1$, $N_2$, $N_3$, $N_4$, $N_5$,...) of the goal net 56. For example, the game machine 10 projects a leading end position $B_1$ of the ball object 48 onto the surface (for example, front surface 56a or side surface 56b) of the goal net 56 against which the ball object 48 has collided. Then, the game machine 10 selects the node that is closest to a projection position $B_2$. Subsequently, the game machine 10 calculates a distance "r" from the position (N3 in the example of FIG. 16) of the selected node to the leading end position $B_1$ of the ball object 48.

Herein, the distance "r" represents a distance corresponding to the projection direction $D_2$ (or its reverse projection direction $D_3$) of the leading end position $B_1$ of the ball object 48. Then, the game machine 10 moves the position of the selected node toward the above-mentioned direction $D_3$ by the distance "r". In addition, the game machine 10 moves positions of nodes around the selected node toward the above-mentioned direction $D_3$ by a distance decided based on the distance "r". For example, the game machine 10 moves the positions of the nodes adjacent to the selected node toward the above-mentioned direction $D_3$ by the distance (r*3/4). Note that "*" denotes a multiplication operator.

After that, the processing in the case where the ball object 48 collides against the goal net 56 is brought to an end. Note that herein, the description is made mainly of the behavior control performed on the ball object 48 and the goal net 56 in a case where the ball object 48 enters the inside of the goal object 44 and collides against an inner side of the goal net 56, but it is possible to similarly perform the behavior control on the ball object 48 and the goal net 56 in a case where the ball object 48 collides against an outer side of the goal net 56.

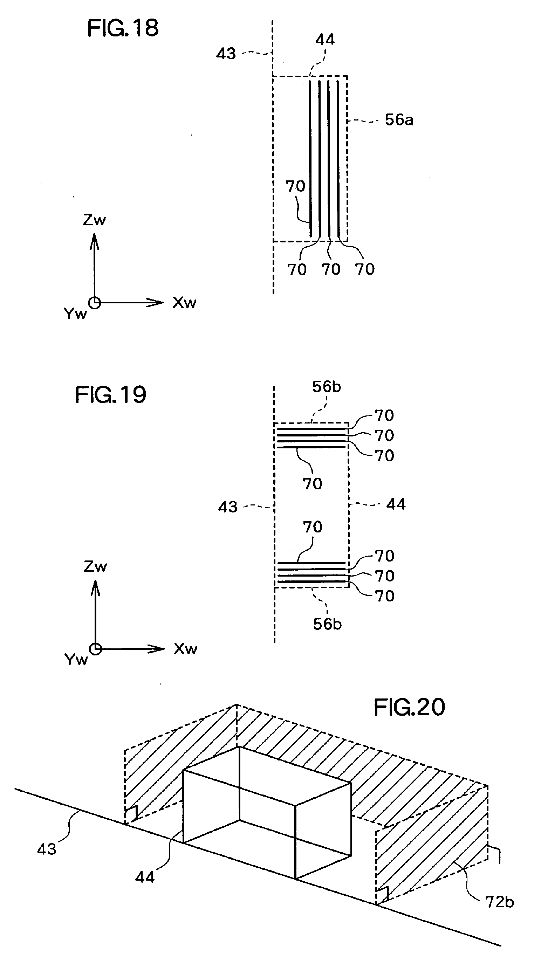

FIGS. 18 and 19 each illustrate a layout example of the behavior control-purpose objects 70 for controlling the behaviors of the ball object 48 and the goal net 56 in the case where the ball object 48 collides against the outer side of the goal net 56. Note that FIGS. 18 and 19 also use the dotted lines to indicate the goal object 44 and the goal line 43 in order to make it easy to grasp the layout state of the behavior control-purpose objects 70.

FIG. 18 illustrates an example of the behavior control-purpose objects 70 that are located in order to control the behaviors of the ball object 48 and the goal net 56 in a case where the ball object 48 collides against the outer surface side of the front surface 56a of the goal net 56. The behavior control-purpose objects 70 illustrated in FIG. 18 are located in a space on the inner surface side of the front surface 56a of the goal net 56. The behavior control-purpose objects 70 illustrated in FIG. 18 are located so as to have its surface side directed toward the front surface 56a of the goal net 56.

FIG. 19 illustrates an example of the behavior control-purpose objects 70 that are located in order to control the behaviors of the ball object 48 and the goal net 56 in a case where the ball object 48 collides against the outer surface side of the side surface 56b of the goal net 56. The behavior control-purpose objects 70 illustrated in FIG. 19 are located in a space on the inner surface side of the side surface 56b of the goal net 56. The behavior control-purpose objects 70 illustrated in FIG. 19 are located so as to have their surface side directed toward the side surface 56b of the goal net 56.

Note that in each of FIGS. 18 and 19, the value of the "bounce flag" field, which corresponds to one of the behavior control-purpose objects 70 that exists at the most distant position from the front surface 56a or the side surface 56b of the goal net 56, is set to "1", while the value of the "bounce flag" field corresponding to the other behavior control-purpose objects 70 is set to "0".

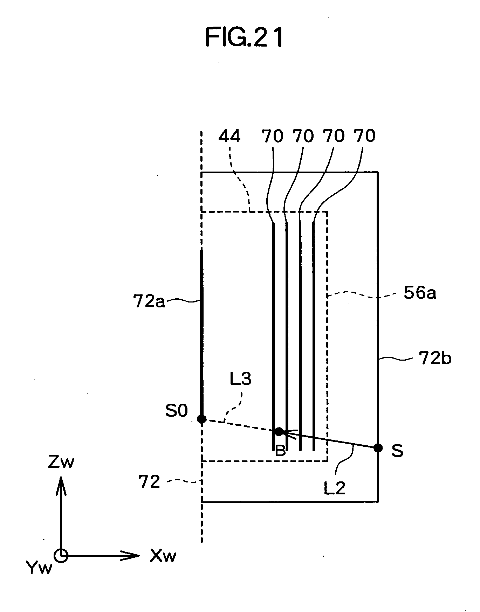

FIGS. 20 and 21 are diagrams for describing the processing of Steps S202 and S203 of FIG. 11 in the case where the ball object 48 collides against the outer side of the front surface 56a or the side surface 56b of the goal net 56. Note that in FIG. 21, the goal object 44 is indicated by the dotted line in order to make it easy to grasp relationships between the reference point S, the current position B of the ball object 48, the straight line L2, the behavior control-purpose objects 70, and the like.

If the ball object 48 collides against the outer side of the front surface 56a or the side surface 56b of the goal net 56, in Step S202 of FIG. 11, a reference point setting subject region 72b as illustrated in, for example, FIG. 20 is set in addition to the reference point setting subject region 72a illustrated in FIGS. 12 to 15. As illustrated in FIG. 20, the reference point setting subject region 72b is set so as to surround the goal object 44 in the space on the outer side of the goal object 44.

In this case, the game machine 10 first acquires the reference point S illustrated in FIG. 13 or 14 as S0. That is, in the same manner as in the case where the ball object 48 collides against the inner side of the front surface 56a or the side surface 56b of the goal net 56, the game machine 10 acquires the intersection point I of the perpendicular L1, which extends from the current position B of the ball object 48 toward the reference plane 72, and the reference plane 72 (see FIGS. 13 and 14). Then, if the intersection point I is within the reference point setting subject region 72a, the game machine 10 acquires the intersection point I as S0. Meanwhile, if the intersection point I is not within the reference point setting subject region 72a, the game machine 10 acquires a point on the reference point setting subject region 72a, which is closest to the intersection point I, as S0. After the point S0 is acquired, as illustrated in FIG. 21, the game machine 10 acquires an intersection point of: a straight line L3 that extends from the point S0 along a direction toward the current position B of the ball object 48; and the reference point setting subject region 72b, as the reference point S. Then in Step S203 of FIG. 11 the ID of the behavior control-purpose object 70 that intersects the straight line L2 extending from the reference point S to the current position B of the ball object 48 acquired.

Note that in Step S203 of FIG. 11, it is preferable that the game machine 10 may judge that the straight line L2 intersects the behavior control-purpose object 70 only when the straight line L2 extending from the reference point S to the current position B of the ball object 48 intersects the behavior control-purpose object 70 from the front side of the behavior control-purpose object 70. This results in the judgment that the ball object 48 does not contact the behavior control-purpose object 70 illustrated in FIG. 18 or 19, for example, when the ball object 48 enters the inside of the goal object 44 and collides against the inner side of the front surface 56a of the goal net 56. Alternatively, it is judged that the ball object 48 does not contact (collide against) the behavior control-purpose object 70 illustrated in FIG. 7, for example, when the ball object 48 collides against the outer side of the front surface 56a of the goal net 56.

According to the game machine 10 described above, expression of the behaviors of the ball object 48 and the goal net 56 in the case where the ball object 48 collides against the goal net 56, which exhibits high reality, can be realized without performing a complicated simulation calculation or the like. That is, the expression of the behaviors of the ball object 48 and the goal net 56 in the case where the ball object 48 collides against the goal net 56, which exhibits high reality, can be realized while achieving reduction in processing load.

Further, according to the game machine 10, it becomes possible for a person in charge of designing the goal object 44 (person who is thoroughly familiar with the shape and the like of the goal object 44) to set the behavior control-purpose objects 70 and the behavior control table in accordance with the shape and the like of the goal object 44, and to create those data and shape data and the like of the goal object 44 as data on the goal object 44. That is, the game machine 10 makes it easier for the person in charge of designing the goal object 44 to participate in the behavior control performed on the ball object 48 and the goal net 56 in the case where the ball object 48 collides against the goal net 56.

Incidentally, the shape and structure of a goal used in real soccer is not fixed, and there exist diverse goals different in shape and structure. Therefore, by also introducing a plurality of kinds of goals different in shape and structure into a soccer game, the soccer game can be improved in reality. However, if the shape and structure of the goal object 44 vary, the behaviors of the ball object 48 and the goal net 56 in the case where the ball object 48 collides against the goal net 56 also vary. Therefore, if the plurality of kinds of goal objects 44 are to be introduced into a game, a conventional method forces a game programmer to create, for each of the goal objects 44, a program (program for controlling the behaviors of the ball object 48 and the goal net 56 in the case where the ball object 48 collides against the goal net 56) in accordance with the shape and structure of the goal object 44. Therefore, there is a fear that time and labor required for the game programmer may increase if the plurality of kinds of goal objects 44 are to be introduced into the game. In this respect, according to the game machine 10, the behavior control-purpose objects 70 can be located in accordance with the shape and structure of the goal object 44, and hence in the case where the plurality of kinds of goal objects 44 are to be introduced into the game, the time and labor for creating, for each of the goal objects 44, the program in accordance with the shape and structure of the goal object 44 are reduced. That is, the game machine 10 makes it possible to introduce the plurality of kinds of goal objects 44 into the game while suppressing an increase in the time and labor required for the game programmer.

Further, on the game machine 10, the bounce flag is stored in association with each behavior control-purpose object 70. Then, the behavior of the ball object 48 is controlled based on the bounce flag associated with each behavior control-purpose object 70. If the ball object 48 that has collided against the goal net 56 advances too far ahead, a natural state is not displayed on the game screen, which instead impairs the reality. In this respect, on the game machine 10, the bounce flag corresponding to the behavior control-purpose object 70 illustrated in each of FIGS. 7, 8, 18, and 19, which exists at the most distant position from the front surface 56a or the side surface 56b of the goal net 56, is set to "1". Then, if the ball object 48 contacts the behavior control-purpose object 70, the behavior of the ball object 48 is controlled assuming that the ball object 48 has been bounced at a given bounce coefficient by the behavior control-purpose object 70. That is, the ball object 48 is controlled so as not to advance any farther ahead. As a result, the game machine 10 achieves prevention of the ball object 48 that has collided against the goal net 56 from advancing too far ahead.

Further, on the game machine 10, in the processing executed every predetermined time (for example, 1/60th of a second), the reference point is calculated each time based on the current position of the ball object 48, and it is judged whether or not the straight line from the reference point to the current position of the ball object 48 intersects each of the behavior control-purpose objects 70 to thereby judge each time whether or not the ball object 48 has contacted each of the behavior control-purpose objects 70. If the behavior control is performed on the ball object 48 and the goal net 56 based on a judgment result as to whether or not the ball object 48 has contacted the behavior control-purpose object 70, for example, there is a possible method in which flag information that indicates whether or not the ball object 48 has contacted each of the behavior control-purpose objects 70 in association therewith is stored, and based on the flag information, the behavior control is executed on the ball object 48 and the goal net 56. However, this method makes it necessary to store the flag information that indicates whether or not the ball object 48 has contacted each of the behavior control-purpose objects 70 in association therewith, which becomes a drawback of an increase in data amount. Further, if this method is used in a case where, for example, the soccer game has a replay function of reproducing replay data recorded for each scene to be replayed, there is a possibility that the behaviors of the ball object 48 and the goal net 56 may not be reproduced (replayed) accurately on a replay screen. That is, if the first situation to be reproduced by the replay data is a situation after the ball object 48 has collided against at least one of the behavior control-purpose objects 70, the behavior control-purpose object 70 against which the ball object 48 had collided before is then unknown, and hence the behaviors of the ball object 48 and the goal net 56 are not reproduced accurately on the replay screen. In this respect, according to the game machine 10, it becomes possible to suppress the increase in the data amount. Further, according to the game machine 10, also in the replay function as described above, the behaviors of the ball object 48 and the goal net 56 in the case where the ball object 48 collides against the goal net 56 are reproduced (replayed) accurately.

Note that the present invention is not limited to the embodiment as described above.

For example, instead of the "reaction coefficient" field, the behavior control table may be provided with a "repulsion coefficient" field for storing a repulsion coefficient (acceleration vector information) and a "friction coefficient" field for storing a friction coefficient (acceleration vector information). With this provision, the behavior of the ball object 48 in the case where the ball object 48 collides against the goal net 56 may be controlled by separately considering a repulsive force component and a friction force component of a force applied to the ball object 48 by the goal net 56.

Further, for example, in addition to the "reaction coefficient" field, the behavior control table may be provided with a "reaction vector" field for storing vector information (acceleration vector information) that indicates an operating direction of a reaction. With this provision, a force having a direction other than the normal direction of the front-side surface of the behavior control-purpose object 70 may be applied to the ball object 48.

Further, for example, instead of the "reaction coefficient" field, the behavior control table may be provided with an "acceleration vector" field for storing information (acceleration vector information) that indicates the acceleration vector of the ball object 48 resulting from a force by which the goal net 56 pushes back the ball object 48.

Further, for example, instead of the "bounce flag" field, or in addition to the "bounce flag" field, the behavior control table may be provided with a "bounce coefficient" field for storing a bounce coefficient (bounce control information). With this provision, the bounce coefficient may be changed for each behavior control-purpose object 70.

Further, for example, the present invention is not limited to the case of expressing the state in which the ball object 48 collides against the goal net 56. For example, the present invention can also be used in a case of expressing a state in which a ball, a smoke candle, or the like (mobile object) collides against a large flag (collided object) being waved by the spectators at their seats in a soccer stadium. At this time, a state in which a shape of the flag is being changed due to the spectators' waving of the flag is expressed by, for example, animation. In such a case, the position and the shape of the behavior control-purpose object 70 and the reaction coefficient (acceleration vector information) associated with the behavior control-purpose object 70 may be changed in synchronization with animation information that indicates the change in shape of the flag due to the spectators' flag waving action. In such a manner, the position and the shape of the behavior control-purpose object 70 and the reaction coefficient (acceleration vector information) associated with the behavior control-purpose object 70 may be changed in accordance with the change in shape of the collided object resulting from an event other than the collision of the mobile object. Accordingly, it becomes possible to suitably express the state in which the mobile object collides against the collided object even in the case where the shape of the collided object is changed due to an event other than the collision of the mobile object. Note that if there are changes in position and shape of behavior control-purpose object 70, the positions and the shapes of the reference point setting subject regions 72a and 72b need to be changed in accordance with those changes. Therefore, data obtained by associating each frame of the animation expressing the change in shape of the collided object with information for identifying the positions and the shapes of the reference point setting subject regions 72a and 72b, for example, is stored. The data is, for example, table-format data obtained by associating each frame of the animation expressing the change in shape of the collided object with information for identifying coordinates of each of vertices of the reference point setting subject regions 72a and 72b. Further, for example, the above-mentioned data may be data of a computing equation format for calculating the coordinates of each of the vertices of the reference point setting subject regions 72a and 72b based on the position (for example, a numerical value indicating the ordinal position of the frame counted from the head) of each frame of the animation expressing the change in shape of the collided object. Based on the data described above, the positions and the shapes of the reference point setting subject regions 72a and 72b are changed in accordance with the change in shape of the collided object resulting from an event other than the collision of the mobile object.

Further, for example, the present invention can also be applied to a game machine that executes a game other than the soccer game. For example, by applying the present invention to a game machine that executes a volleyball game, it is also possible to suitably express a state in which a ball collides with a net. Further, the present invention may be applied to an image processor other than the game machine. The present invention can be used in the case of expressing the state in which the mobile object collides against the collided object that is deformed by the mobile object colliding against it. Note that examples of the collided object include a sheet-like object such as a net or a cloth, and a sponge-like object.

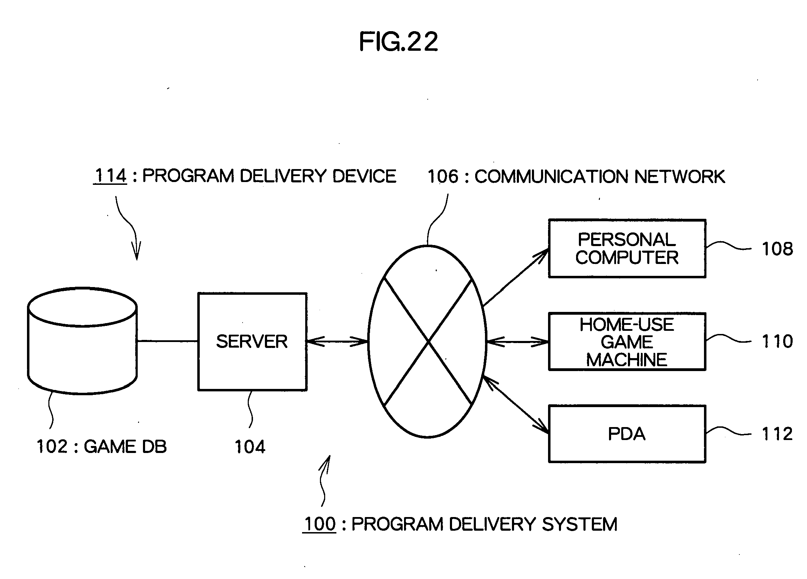

Further, for example, in the above-mentioned description, the program is supplied from the DVD-ROM 25 serving as an information recording medium to the home-use game machine 11, but the program may be delivered to a household or the like via a communication network. FIG. 22 is a diagram illustrating an overall configuration of a program delivery system using the communication network. Based on FIG. 22, description is given of a program delivery method according to the present invention. As illustrated in FIG. 22, the program delivery system 100 includes a database 102 (information recording medium), a server 104, a communication network 106, a personal computer 108, a home-use game machine 110, and a personal digital assistant (PDA) 112. Of those, the database 102 and the server 104 constitute a program delivery device 114. The communication network 106 includes, for example, the Internet and a cable television network. In this system, the same program as storage contents of the DVD-ROM 25 is stored in the database 102. A demander uses the personal computer 108, the home-use game machine 110, or the PDA 112 to make a program delivery request, and hence the program delivery request is transferred to the server 104 via the communication network 106. Then, the server 104 reads the program from the database 102 according to the program delivery request, and transmits the program to a program delivery request source such as the personal computer 108, the home-use game machine 110, and the PDA 112. Here, the program delivery is performed according to the program delivery request, but the server 104 may transmit the program one way. In addition, all of programs are not necessarily delivered at one time (delivered collectively), and necessary parts may be delivered (split and delivered) as needed. By thus performing the program delivery via the communication network 106, the demander can obtain the program with ease.

**Claims**

1. An image processor, which locates a mobile object, and a collided object that is deformed in the case where the mobile object collides against it, in a virtual three-dimensional space and displays an image showing a state in which the mobile object collides against the collided object, comprising:

   acceleration vector information storage means for storing acceleration vector information for identifying an acceleration vector of the mobile object resulting from a force applied to the mobile object by the collided object, in association with each of a plurality of behavior control-purpose objects that are located in a space on a back surface side of a surface, against which the mobile object collides, of the collided object;
   judgment means for judging whether or not the mobile object contacts at least one of the plurality of behavior control-purpose objects; and
   mobile object behavior control means for controlling, if it is judged that the mobile object contacts at least one of the plurality of behavior control-purpose objects, behavior of the mobile object based on the acceleration vector identified by the acceleration vector information associated with the at least one of the behavior control-purpose objects.

2. An image processor according to claim 1, further comprising bounce control information storage means for storing, in association with each of the plurality of behavior control-purpose objects, bounce control information that indicates whether or not the mobile object is bounced by the behavior control-purpose object,
   wherein the mobile object behavior control means comprises means for controlling, if the bounce control information associated with the behavior control-purpose object judged to contact the mobile object indicates that the mobile object is bounced by the behavior control-purpose object, the behavior of the mobile object assuming that the mobile object is bounced at a given bounce coefficient by the behavior control-purpose object.

3. An image processor according to claim 1 or 2, wherein:

   the judgment means comprises reference position setting means for setting a reference position by executing a predetermined computation based on a current position of the mobile object; and
   the judgment means judges whether or not the mobile object contacts at least one of the plurality of behavior control-purpose objects by judging whether or not a straight line from the reference position set by the reference position setting means to the current position of the mobile object intersects at least one of the plurality of behavior control-purpose objects.

4. A control method for an image processor which locates a mobile object, and a collided object that is deformed in the case where the mobile object collides against it, in a virtual three-dimensional space and displays an image showing a state in which the mobile object collides against the collided object, the control method comprising:

   a step of reading storage contents of acceleration vector information storage means for storing acceleration vector information for identifying an acceleration vector of the mobile object resulting from a force applied to the mobile object by the collided object, in association with each of a plurality of behavior control-purpose objects that are located in a space on a back surface side of a surface, against which the mobile object collides, of the collided object;
   a judgment step of judging whether or not the mobile object contacts at least one of the plurality of behavior control-purpose objects; and
   a mobile object behavior control step of controlling, if it is judged that the mobile object contacts at least one of the plurality of behavior control-purpose objects, behavior of the mobile object based on the acceleration vector identified by the acceleration vector information associated with the at least one of the behavior control-purpose objects.

5. A computer-readable information recording medium recorded with a program for causing a computer to function as an image processor which locates a mobile object, and a collided object that is deformed in the case where the mobile object collides against it, in a virtual three-dimensional space and displays an image showing a state in which the mobile object collides against the collided object,
the program further causing the computer to function as:

acceleration vector information storage means for storing acceleration vector information for identifying an acceleration vector of the mobile object resulting from a force applied to the mobile object by the collided object, in association with each of a plurality of behavior control-purpose objects that are located in a space on a back surface side of a surface, against which the mobile object collides, of the collided object;
judgment means for judging whether or not the mobile object contacts at least one of the plurality of behavior control-purpose objects; and
mobile object behavior control means for controlling, if it is judged that the mobile object contacts at least one of the plurality of behavior control-purpose objects, behavior of the mobile object based on the acceleration vector identified by the acceleration vector information associated with the at least one of the behavior control-purpose objects.

# FIG.1

# FIG.2

40 : VIRTUAL THREE-DIMENSIONAL SPACE

# FIG.3

# FIG.4

# FIG.5

60 : GAME DATA STORAGE UNIT

| BEHAVIOR CONTROL INFORMATION STORAGE UNIT | JUDGMENT UNIT | BALL OBJECT BEHAVIOR CONTROL UNIT | 64a |
| | 62 | GOAL NET BEHAVIOR CONTROL UNIT | 64b |

60a

64 : OBJECT BEHAVIOR CONTROL UNIT

## FIG.6

## FIG.7

## FIG.8

# FIG.9

| ID | REACTION COEFFICIENT | BOUNCE FLAG |
|----|----------------------|-------------|
| 1 | K1 | 0 |
| 2 | K2 | 0 |
| 3 | K3 | 0 |
| 4 | K4 | 1 |
| · · · | · · · | · · · |

# FIG.10

START

↓

GAME ENVIRONMENT PROCESSING — S101

↓

GEOMETRY PROCESSING — S102

↓

RENDERING PROCESSING — S103

↓

END

## FIG.11

```
            ( START )
                │
                ▼
┌─────────────────────────────┐
│  JUDGE WHICH OF SURFACES OF  │ ─── S201
│    GOAL NET BALL OBJECT      │
│      COLLIDES AGAINST        │
└─────────────────────────────┘
                │
                ▼
┌─────────────────────────────┐
│     SET REFERENCE POINT      │ ─── S202
└─────────────────────────────┘
                │
                ▼
┌─────────────────────────────┐
│   ACQUIRE ID OF BEHAVIOR     │
│   CONTROL-PURPOSE OBJECT     │
│   THAT INTERSECTS STRAIGHT   │ ─── S203
│     LINE EXTENDING FROM      │
│  REFERENCE POINT TO CURRENT  │
│    POSITION OF BALL OBJECT   │
└─────────────────────────────┘
                │
                ▼           S204
        ╱─────────────────╲  N
       ╱  ARE ALL OF BOUNCE ╲──────────────────┐
       ╲   FLAGS ASSOCIATED  ╱                  │
        ╲ WITH ACQUIRED ID'S╱                   │
         ╲     "0"?        ╱                     │
           ────┬─────                            │
        S205   │ Y                       S208    │
┌────────────────────────┐    ┌─────────────────────────┐
│  ACQUIRE REACTION      │    │   UPDATE CURRENT        │
│  VECTORS APPLIED TO    │    │ POSITION, MOVING SPEED  │
│  THE BALL OBJECT       │    │  VECTOR, AND THE LIKE   │
│  BASED ON REACTION     │    │   OF BALL OBJECT        │
│  COEFFICIENTS          │    │  ASSUMING THAT BALL     │
│  ASSOCIATED WITH       │    │  OBJECT IS BOUNCED AT   │
│  ACQUIRED ID'S         │    │  GIVEN BOUNCE           │
└────────────────────────┘    │  COEFFICIENT BY         │
                │             │  BEHAVIOR CONTROL-      │
                ▼             │  PURPOSE OBJECT WHOSE   │
┌────────────────────────┐   │  BOUNCE FLAG IS "1"     │
│ ACQUIRE ACCELERATION   │   └─────────────────────────┘
│  VECTOR OF BALL OBJECT │                │
│  RESULTING FROM        │                │
│  REACTION              │                │
└────────────────────────┘                │
           │  S206                         │
           ▼                               │
┌────────────────────────┐                 │
│ UPDATE CURRENT         │ ─── S207        │
│ POSITION, MOVING SPEED │                 │
│ VECTOR, AND THE LIKE   │                 │
│ OF BALL OBJECT BASED   │                 │
│ ON ACQUIRED            │                 │
│ ACCELERATION VECTOR    │                 │
└────────────────────────┘                 │
                │◄──────────────────────────┘
                ▼
┌────────────────────────┐
│  DEFORM GOAL NET IN    │ ─── S209
│  ACCORDANCE WITH       │
│  CURRENT POSITION OF   │
│  BALL OBJECT           │
└────────────────────────┘
                │
                ▼
          ( RETURN )
```

## FIG.12

## FIG.13

## FIG.14

## FIG.15

## FIG.16

## FIG.17

FIG.18

FIG.19

FIG.20

# FIG.21

# FIG.22

114 : PROGRAM DELIVERY DEVICE    106 : COMMUNICATION NETWORK

102 : GAME DB    104

100 : PROGRAM DELIVERY SYSTEM

EP 2 098 997 A1

# INTERNATIONAL SEARCH REPORT

| International application No. |
| --- |
| PCT/JP2007/072766 |

**A. CLASSIFICATION OF SUBJECT MATTER**
*G06T15/70(2006.01)i, G06T17/40(2006.01)i, A63F13/00(2006.01)i*

According to International Patent Classification (IPC) or to both national classification and IPC

**B. FIELDS SEARCHED**

Minimum documentation searched (classification system followed by classification symbols)
G06T15/70, G06T17/40, A63F13/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2004-321551 A  (Namco Ltd.),<br>18 November, 2004 (18.11.04),<br>Full text; all drawings<br>(Family: none) | 1,2,4,5<br>3 |
| Y<br>A | JP 11-213176 A  (Sega Enterprises, Ltd.),<br>06 August, 1999 (06.08.99),<br>Par. Nos. [0032], [0053] to [0056]<br>(Family: none) | 1,2,4,5<br>3 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 December, 2007 (12.12.07) | Date of mailing of the international search report<br>25 December, 2007 (25.12.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3768971 B